(19) Europäisches Patentamt
European Patent Office
Office européen des brevets

(11) **EP 3 217 710 A1**

(12) **EUROPEAN PATENT APPLICATION**
published in accordance with Art. 153(4) EPC

(43) Date of publication:
**13.09.2017 Bulletin 2017/37**

(51) Int Cl.:
**H04W 24/08** (2009.01)

(21) Application number: **15856575.4**

(22) Date of filing: **14.04.2015**

(86) International application number:
**PCT/CN2015/076576**

(87) International publication number:
**WO 2016/070578 (12.05.2016 Gazette 2016/19)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **07.11.2014 CN 201410625901**

(71) Applicant: **ZTE Corporation**
**Shenzhen, Guangdong 518057 (CN)**

(72) Inventors:
• **MO, Linmei**
**Shenzhen**
**Guangdong 518057 (CN)**
• **ZHAO, Yajun**
**Shenzhen**
**Guangdong 518057 (CN)**
• **XU, Hanqing**
**Shenzhen**
**Guangdong 518057 (CN)**

(74) Representative: **Lavoix**
**Bayerstrasse 83**
**80335 München (DE)**

(54) **METHOD, SYSTEM AND RELEVANT DEVICE FOR MEASURING UNAUTHORIZED CARRIER, AND COMPUTER STORAGE MEDIUM**

(57)    Disclosed is a method for measuring an unauthorized carrier, wherein a network-side device determines an available channel of an unauthorized carrier according to an available state and the availability of an unauthorized carrier channel, and indicates to a user equipment (UE) to measure the available channel, and the UE measures the available channel of the unauthorized carrier indicated by the network-side device and reports a measurement result to the network-side device. At the same time, further disclosed are a system for measuring an unauthorized carrier, a network-side device, a UE and a computer storage medium.

Fig. 4

```
401
Determining the available channel of the unauthorized carrier
according to the available state and the availability of the
unauthorized carrier channel by the network-side device

402
Instructing, by the network-side device, the UE to measure the
available channel

403
Measuring, by the UE, the available channel of the
unauthorized carrier indicated by the network-side device

404
Smoothing the measurement result and reporting the smoothed
measurement result to the network-side device by the UE
```

**Description**

**TECHNICAL FIELD**

The disclosure relates to wireless communication technologies, and in particular, to a method, system, related device and computer storage medium for measuring an unauthorized carrier.

**BACKGROUND**

The Long Term Evolution/Long Term Evolution Advanced (LTE/LTE-A) system is the 4th generation mobile communication standard set by the 3rd Generation Partnership Project (3GPP). The LTE system supports various bandwidth allocations including, for example, 1.4MHz, 3MHz, 5MHz, 10MHz, 15MHz and 20MHz, and frequency spectrum allocation is more flexible. The LTE system mainly works on an authorized frequency spectrum at present, and frequency bands selected by different regions are different. The North American network plan uses 700/800MHz and 1700/1900MHz. The European network plan uses 800MHz, 1800MHz, and 2600MHz. The Asian network plan uses 1800MHz and 2600MHz. The Australian network plan uses 1800MHz.

In order to support a wider frequency band, the LTE-A system introduces Carrier Aggregation (CA). The basic idea of CA is forming a wider frequency spectrum by aggregating multiple continuous or discrete carriers. The LTE-A system can support up to the bandwidth of 100MHz through CA.

With the continuous growth of data services, an authorized frequency spectrum resource is getting more and more crowed and strained. So a natural idea is using, with assistance of an authorized carrier, a method like CA to extend the LTE/LTE-A system to be used on an unauthorized frequency spectrum resource.

On an unauthorized frequency spectrum, there are a WiFi system, a Radar system and other systems in addition to the LTE system. For guaranteeing the fairness, different regions have different regulatory requirements, including Transmit Power Control (TPC), Dynamic Frequency Selection (DFS), Listen Before Talk (LBT) and so on. These systems need to obtain resources by means of competition, which requires each system to be able to monitor, measure and even identify whether other systems or other network nodes have occupied a channel resource.

The measurement of the WiFi system is mainly a Received Signal Strength Indicator (RSSI), which represents a broadband receiving power on a channel bandwidth received by a receiver. In a no-load state, interference is mainly determined by measuring and referring to an average value of the RSSI. When it is found that an RSSI value is obviously higher than a certain threshold, then there is a reverse link interference, that is, a channel is occupied by other systems or other network nodes at present.

The measurement of the LTE system mainly includes a channel state information measurement and a Radio Resource Management (RRM) measurement. The channel state information measurement mainly includes a Common Reference Signal (CRS) measurement and a Channel State Information Reference Signal (CSI-RS) measurement. The RRM measurement mainly includes a Reference Signal Receiving Power (RSRP) measurement, and an RSSI and Reference Signal Receiving Quality (RSRQ) measurement. The RSRP is defined as an average value of linear powers received on all Resource Elements (RE) carrying the CRS in a measuring frequency bandwidth. The RSSI is defined as an average value of linear total receiving powers of Orthogonal Frequency Division Multiplexing (OFDM) symbols where a CRS antenna port 0 in the measuring frequency bandwidth is, wherein there are N Resource Blocks (RBs) in the measuring frequency bandwidth. The RSSI includes all sources received by a User Equipment (UE), such as a co-channel serving cell, a co-channel non-serving cell, an adjacent cell interference and thermal noise. When an upper layer configures the RSSI to measure in some sub-frame sets, the RSSI should perform measurement by using all the OFDM symbols in these sub-frame sets. The RSRQ is defined as: RSRQ=N*RSRP/RSSI.

On the authorized carrier, a cell sends a PSS/SSS with a period of 5ms, a CRS with a period of 1 ms, and a CSI-RS to perform cell detection and RRM measurement. In an LAA system, the short-time periodic transmission will cause interference with the adjacent WiFi system and other LAA nodes. Moreover, because it is uncertain whether an unauthorized carrier resource has been occupied, the reference signal must be sent discontinuously. The original methods for channel state information measurement and RRM measurement in the LTE system have some problems.

So, it is needed to provide a measuring method for the LTE system, so that the measurement operations of the LTE system can adapt to a situation where the reference signal on the unauthorized frequency spectrum is transmitted discontinuously, can evaluate an occupancy situation of an unauthorized carrier resource correctly, and can provide reliable channel state information and an RRM measurement result to the LTE system.

SUMMARY

In order to solve the existing technical problem, the embodiment of the disclosure mainly provides a method, system and related device for measuring an unauthorized carrier, and a computer storage medium.

The embodiment of the disclosure provides a measuring method for an unauthorized carrier. The method includes that: a network-side device determines an available channel of an unauthorized carrier according to an available state and the availability of an unauthorized carrier channel, and instructs a UE to measure the available channel.

In the above solution, the step that the network-side device instructs the UE to measure the available channel may include that: a measurement reference signal is sent to the UE during the time period of occupying the available channel, so as to instruct the UE to measure the available channel according to the measurement reference signal.

In the above solution, the step that the network-side device determines the available channel of the unauthorized carrier according to the available state and the availability of the unauthorized carrier channel may include that: the network-side device determines the available state of the unauthorized carrier channel as a target according to a regional regulatory requirement, and after determining the available state of the unauthorized carrier channel is a normal used state, measures the availability of the unauthorized carrier channel according to a fixed measuring bandwidth or a variable measuring bandwidth, so as to obtain the available channel according to the measurement.

In the above solution, the step that the network-side device measures the availability of the unauthorized carrier channel according to the fixed measuring bandwidth or the variable measuring bandwidth includes that: the network-side device predetermines a measuring bandwidth W1 according to a data sending requirement, and measures the availability of the unauthorized carrier channel according to the measuring bandwidth W1; or the network-side device adjusts the measuring bandwidth W1 to W2, ..., Wn, and measures the availability of the unauthorized carrier channel according to W2, ..., Wn. The W, W2, ..., Wn are different values.

In the above solution, the network-side device measures the availability by any one of the following manners 1)-3).

1) The network-side device detects an energy on one or more unauthorized carrier channels, and determines the availability of the unauthorized carrier channel according to the relationship between the detected energy and a preset threshold.

2) The network-side device measures a co-system interference and an inter-system interference of the unauthorized carrier channel, and determines the availability of the unauthorized carrier channel according to the measured interference result. When it is detected that interference signals are inter-system signals, the unauthorized carrier channel is considered as an unavailable channel. When it is detected that interference signals are co-system signals, the unauthorized carrier channel is considered as an available channel. When it is detected that a part of the interference signals is the co-system signals, and the other part of the interference signals is the inter-system signals, according to the preset threshold of the proportion of a co-system signal energy v.s. inter-system signal energy, when the co-system signal energy is greater than the threshold, the interference is determined as the co-system interference, and the unauthorized carrier channel is considered as the available channel. When the co-system signal energy is not greater than the threshold, the interference is determined as the inter-system interference, and the unauthorized carrier channel is considered as the unavailable channel. When the interference signal during silence of a system is detected, the interference is determined as the inter-system interference, and the unauthorized carrier channel is considered as the unavailable channel.

3) The network-side device presets a first threshold, a second threshold and a third threshold, and detects the energy on one or more unauthorized carrier channels. When the detected energy is less than the first threshold, the unauthorized carrier channel is considered as the directly available channel. When the detected energy is greater than the first threshold and less than the second threshold, the co-system interference and the inter-system interference of the unauthorized carrier channel are measured. The availability of the unauthorized carrier channel is determined according to the measured interference result. When the detected energy is greater than the third threshold, the unauthorized carrier channel is considered as the unavailable channel.

In the above solution, the method may further include that: the network-side device sends a measurement reference signal in form of Short Control Signaling (SCS) to the UE during the time period of not occupying the available channel.

In the above solution, the method may further include that: when sending the measurement reference signal in form of SCS to the UE during the time period of not occupying the available channel, the network-side device implicitly informs the UE of the sending situation of the measurement reference signal in form of SCS through an available state of the available channel, or explicitly informing the UE of the sending situation of the measurement reference signal in form of SCS by sending a downlink control signal to the UE through a Primary Cell (Pcell.

In the above solution, the method may further include that: the network-side device still continues detecting the available state and the availability of all the unauthorized carrier channels during the time period of occupying the available channel of the unauthorized carrier, maintains a list of available channels, and when determining, according to the measurement result reported by the UE, that the channel state of the unauthorized carrier channel being occupied deteriorates, switches to the other channels according to the list of available channels.

In the above solution, the method may further include that: when uplink transmission on the unauthorized carrier is supported, the network-side device measures uplink measurement signals discontinuously sent by the UE.

The embodiment of the disclosure also provides a measuring method for an unauthorized carrier. The method includes that: the UE measures the available channel of the unauthorized carrier indicated by the network-side device, and smoothes the measurement result and reports the smoothed measurement result to the network-side device.

In the above solution, the step that the UE measures the available channel of the unauthorized carrier indicated by the network-side device includes that: the UE measures the available channel of the unauthorized carrier according to the measurement reference signal issued by the network-side device.

In the above solution, the step that the measurement result is smoothed and reported to the network-side device includes that: the UE performs statistics on the measurement results according to a time period for occupying the available channel of the unauthorized carrier for each occupying or a specified time period; and reports the measurement result of the time period of occupying the available channel via an authorized carrier or the unauthorized carrier during the time period of occupying the available channel.

In the above solution, that the measurement result is smoothed and reported to the network-side device includes that: after performing measurement during both the time period of occupying the available channel and the time period of not occupying the available channel, the UE smoothes the measurement results of the time period of occupying the available channel and the time period of not occupying the available channel in any one of the manners 1)-2).

1) The measurement result of the time period of occupying the available channel is smoothed separately, and the measurement result of the time period of not occupying the available channel is smoothed separately.

2) The measurement results of the time period of occupying the available channel and the time period of not occupying the available channel are smoothed together by using different weighting factors.

The embodiment of the disclosure also provides a measuring method for an unauthorized carrier. The method includes that: the network-side device determines the available channel of the unauthorized carrier according to the available state and the availability of the unauthorized carrier channel, and instructs the UE to measure the available channel; and the UE measures the available channel of the unauthorized carrier indicated by the network-side device, and smoothes the measurement result and reports the smoothed measurement result to the network-side device.

The embodiment of the disclosure also provides a network-side device. The network-side device includes an available channel determining module and a signal issuing module.

The available channel determining module is configured to determine the available channel of the unauthorized carrier according to the available state and the availability of the unauthorized carrier channel.

The signal issuing module is configured to instruct the UE to measure the available channel.

In the above solution, the signal issuing module may be configured to send the measurement reference signal to the UE during the time period of occupying the available channel, so as to instruct the UE to measure the available channel according to the measurement reference signal.

In the above solution, the available channel determining module may be configured to determine the available state of the unauthorized carrier channel as a target according to the regional regulatory requirement, and after determining the available state of the unauthorized carrier channel is the normal used state, measure the availability of the unauthorized carrier channel according to the fixed measuring bandwidth or the variable measuring bandwidth, so as to obtain the available channel according to the measurement.

In the above solution, the available channel determining module may measure the availability in any one of the manners 1)-3).

1) The energy is detected on one or more unauthorized carrier channels, and the availability of the unauthorized carrier channel is determined according to the relationship between the detected energy and the preset threshold.

2) The co-system interference and the inter-system interference of the unauthorized carrier channel are measured, and the availability of the unauthorized carrier channel is determined according to the measured interference result. When it is detected that the interference signals are the inter-system signals, the unauthorized carrier channel is considered as the unavailable channel. When it is detected that the interference signals are the co-system signals, the unauthorized carrier channel is considered as the available channel. When it is detected that a part of the interference signals is the co-system signals, and the other part of the interference signals is the inter-system signals, according to the preset threshold of the proportion of the co-system signal energy v.s. inter-system signal energy, when the co-system signal energy is greater than the threshold, the interference is determined as the co-system interference, and the unauthorized carrier channel is considered as the available channel. When the co-system signal energy is not greater than the threshold, the interference is determined as the inter-system interference, and the unauthorized carrier channel is considered as the unavailable channel. When the interference signal during silence of a system is detected, the interference is determined as the inter-system interference, and the unauthorized carrier channel is considered as the unavailable channel.

3) The first threshold, the second threshold and the third threshold are preset, and the energy is detected on one or more unauthorized carrier channels. When the detected energy is less than the first threshold, the unauthorized carrier channel is considered as the directly available channel. When the detected energy is greater than the first threshold and less than the second threshold, the co-system interference and the inter-system interference of the unauthorized carrier channel are measured, and the availability of the unauthorized carrier channel is determined according to the measured interference result. When the detected energy is greater than the third threshold, the unauthorized carrier channel is considered as the unavailable channel.

In the above solution, the signal issuing module may be further configured to, when a regional regulation allows the sending of SCS, send the measurement reference signal in form of SCS to the UE during the time period of not occupying the available channel.

In the above solution, the signal issuing module may be further configured to implicitly inform the UE of the sending situation of the measurement reference signal in form of SCS through the available state of the available channel, or explicitly informing the UE of the sending situation of the measurement reference signal in form of SCS by sending the downlink control signal to the UE through the Pcell.

In the above solution, the available channel determining module may be further configured to still continue detecting the available state and the availability of all the unauthorized carrier channels during the time period of occupying the available channel of the unauthorized carrier, maintain the list of available channels, and when determining, according to the measurement result reported by the UE, that the channel state of the unauthorized carrier channel being occupied deteriorates, switch to the other channels according to the list of available channels.

In the above solution, the network-side device may further include an uplink measurement module, which may be configured to, when the uplink transmission on the unauthorized carrier is supported, measure the uplink measurement signals discontinuously sent by the UE.

The embodiment of the disclosure also provides a UE. The UE includes a measuring module and a reporting module.

The measuring module is configured to measure the available channel of the unauthorized carrier indicated by the network-side device.

The reporting module is configured to smooth the measurement result and report the smoothed measurement result to the network-side device.

In the above solution, the measuring module may be configured to measure the available channel of the unauthorized carrier according to the measurement reference signal issued by the network-side device.

In the above solution, the reporting module may be configured to perform statistics on the measurement result according to a time period for occupying the available channel of the unauthorized carrier for each occupying or a specified time period; and report the measurement result of the time period of occupying the available channel via an authorized carrier or the unauthorized carrier during the time period of occupying the available channel.

In the above solution, the reporting module may be configured to, after the measuring module has performed measurement during both the time period of occupying the available channel and the time period of not occupying the available channel, smooth the measurement results of the time period of occupying the available channel and the time period of not occupying the available channel in any one of the following manners 1)-2).

1) The measurement result of the time period of occupying the available channel is smoothed separately, and the measurement result of the time period of not occupying the available channel is smoothed separately.

2) The measurement results of the time period of occupying the available channel and the time period of not occupying the available channel are smoothed together by using different weighting factors.

The disclosure also provides a system for measuring an unauthorized carrier. The system includes the network-side device and the UE.

The network-side device is configured to determine the available channel of the unauthorized carrier according to the available state and the availability of the unauthorized carrier channel, and instruct the UE to measure the available channel.

The UE is configured to measure the available channel of the unauthorized carrier indicated by the network-side device, and smooth the measurement result and report the smoothed measurement result to the network-side device.

In the above solution, the network-side device may be configured to send the measurement reference signal to the UE during the time period of occupying the available channel, so as to instruct the UE to measure the available channel according to the measurement reference signal.

Correspondingly, the UE may be configured to measure the available channel of the unauthorized carrier according to the measurement reference signal issued by the network-side device.

In the above solution, the network-side device may be configured to determine the available state of the unauthorized carrier channel of the object according to the regional regulatory requirement, and after determining the available state of the unauthorized carrier channel is the normal used state, measure the availability of the unauthorized carrier channel according to the fixed measuring bandwidth or the variable measuring bandwidth, so as to obtain the available channel according to the measurement.

In the above solution, the network-side device may measure the availability in any one of the following manners 1)-3).

1) The energy is detected on one or more unauthorized carrier channels, and the availability of the unauthorized carrier channel is determined according to the relationship between the detected energy and the preset threshold.

2) The co-system interference and the inter-system interference of the unauthorized carrier channel are measured, and the availability of the unauthorized carrier channel is determined according to the measured interference result. When it is detected that the interference signals are the inter-system signals, the unauthorized carrier channel is considered as the unavailable channel. When it is detected that the interference signals are the co-system signals, the unauthorized carrier channel is considered as the available channel. When it is detected that a part of the interference signals is the co-system signals, and the other part of the interference signals is the inter-system signals, according to the preset threshold of the proportion of the co-system signal energy v.s. inter-system signal energy, when the co-system signal energy is greater than the threshold, the interference is determined as the co-system interference, and the unauthorized carrier channel is considered as the available channel. When the co-system signal energy is not greater than the threshold, the interference is determined as the inter-system interference, and the unauthorized carrier channel is considered as the unavailable channel. When the interference signal during silence of a system is detected, the interference is determined as the inter-system interference, and the unauthorized carrier channel is considered as the unavailable channel.

3) The first threshold, the second threshold and the third threshold are preset, and the energy is detected on one or more unauthorized carrier channels. When the detected energy is less than the first threshold, the unauthorized carrier channel is considered as the directly available channel. When the detected energy is greater than the first threshold and less than the second threshold, the co-system interference and the inter-system interference of the unauthorized carrier channel are measured. The availability of the unauthorized carrier channel is determined according to the measured interference result. When the detected energy is greater than the third threshold, the unauthorized carrier channel is considered as the unavailable channel.

The embodiment of the disclosure also provides a computer storage medium containing a set of instructions that, when being executed, cause at least one processor to perform the measuring method for an unauthorized carrier performed by the network-side device, or perform the measuring method for an unauthorized carrier performed by the UE.

According to a method, system and related device for measuring an unauthorized carrier, and a computer storage medium provided by at least some embodiments of the disclosure. The network-side device determines the available channel of the unauthorized carrier according to the available state and the availability of the unauthorized carrier channel, and instructs the UE to measure the available channel. In such a manner, the measurement operations performed for an unauthorized carrier can adapt to a situation where the reference signal on the unauthorized frequency spectrum is transmitted discontinuously, an occupancy situation of an unauthorized carrier resource can be evaluated correctly and a regulation requirement of the unauthorized carrier can be met, and an RRM measurement result will be more accurate.

**BRIEF DESCRIPTION OF THE DRAWINGS**

Fig. 1 is a flowchart of a measuring method for an unauthorized carrier implemented at a network side according to an embodiment of the disclosure;

Fig. 2 is a schematic diagram of dividing channels provided by an embodiment of the disclosure;

Fig. 3 is a flowchart of a measuring method for an unauthorized carrier implemented at a UE according to an embodiment of the disclosure;

Fig. 4 is an overall flowchart of a measuring method for an unauthorized carrier implemented by an embodiment of the disclosure;

Fig. 5 is a schematic view of a structure of a network-side device implemented by an embodiment of the disclosure;

Fig. 6 is a schematic view of a structure of a UE implemented by an embodiment of the disclosure; and

Fig. 7 is a schematic view of a structure of a system for measuring an unauthorized carrier implemented by an embodiment of the disclosure.

## DETAILED DESCRIPTION

In the embodiment of the disclosure, a network-side device determines an available channel of an unauthorized carrier according to an available state and the availability of an unauthorized carrier channel, and instructs a UE to measure the available channel. The UE measures the available channel of the unauthorized carrier indicated by the network-side device, and reports a measurement result to the network-side device. Here, the network-side device may be a base station, a central base station or a network node.

The disclosure will be further described in detail with reference to the accompanying drawings and the specific embodiments.

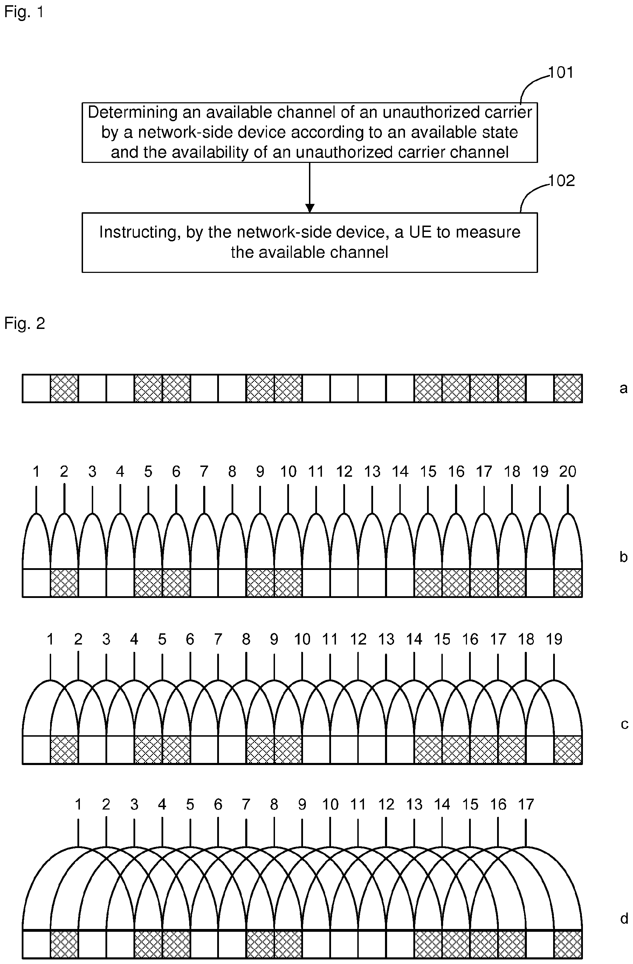

The embodiment of the disclosure implements a measuring method for an unauthorized carrier. As shown in Fig. 1, the method includes the following steps.

In a step 101, a network-side device determines an available channel of an unauthorized carrier according to an available state and the availability of an unauthorized carrier channel.

Specifically, in the LTE system, the network-side device, such as the base station, determines the available state of the unauthorized carrier channel as a target according to a regional regulatory requirement, so as to determine whether the available state is a disabled state or a normal used state. On the unauthorized carrier, according to the regional regulatory requirement, when there is a radar signal or other forcibly sent signals arriving, it is needed to shut down the unauthorized carrier channel within the required time period, and any system is forbidden to occupy the unauthorized carrier channel within the required time period, then the available state during the time period is the disabled state, and the available state during other time period is the normal used time.

After determining the available state of the unauthorized carrier channel is the normal used state, the network-side device measures the availability of the unauthorized carrier channel according to a fixed measuring bandwidth or a variable measuring bandwidth, so as to obtain the available channel according to the measurement. The available channels include a directly available channel and a conditionally available channel. The available channels may be formed in form of a list of available channels.

The network-side device measures the availability of the unauthorized carrier channel according to the fixed measuring bandwidth or the variable measuring bandwidth in the following modes.

In a mode 1, the network-side device measures the availability of the unauthorized carrier channel according to the fixed measuring bandwidth.

The network-side device can predetermine a measuring bandwidth W1 according to a data sending requirement. For example, the W1 can be selected as one of 1.4MHz, 3MHz, 5MHz, 10MHz, 15MHz and 20MHz. Alternatively, other proper bandwidths may serve as the measuring bandwidth. Then the network-side device measures the availability of the unauthorized carrier channel according to the measuring bandwidth. Specifically, after the measuring bandwidth W1 is determined, the unauthorized carrier can be divided into N unauthorized carrier channels according to the measuring bandwidth W1. The network-side device may directly measure the availability of a channel. Alternatively, the network-side device may measure the availability of all the N channels in turn, and determine the channels as the available channels by the measurement. These available channels form a list of available channels. The network-side device can select, according to the measurement result, the channel in the list as the channel for practical use or competition use.

In a mode 2, the network-side device measures the availability of the unauthorized carrier channel according to the variable measuring bandwidth.

The network-side device may adjust the measuring bandwidth W1 to W2, ..., Wn, which are different values, and measure the availability of the unauthorized carrier channel according to W2, ..., Wn in the following cases.

1) The available channel cannot be detected on the unauthorized carrier according to the measuring bandwidth W1, or the measurement result of the available channel does not meet the requirement. For example, an energy detection result is greater than a certain threshold, or the number of the available channels is less than a certain threshold, which goes against the subsequent dynamic channel adjustment.

2) For obtaining a more complete list of available channels, the network-side device actively measures the availability of the unauthorized carrier channel according to the different measuring bandwidths.

As shown in Fig. 2, by taking the unauthorized carrier with the bandwidth of 100MHz for example, the unauthorized carrier can be divided into 20 channels according to the bandwidth of 5MHz. The unauthorized carrier can be divided into 19 channels according to the bandwidth of 10MHz. The unauthorized carrier can be divided into 17 channels according to the bandwidth of 20MHz. a represents the situation of channel occupancy, the blank represents that the channel here is idle, and the shadow represents that the channel here is busy. For measuring the availability of the channel, if the base station measures the availability of the channel according to the bandwidth of 5MHz, then the channels 1, 3, 4, 7, 8, 11, 12, 13, 14 and 19 are available and idle. If the base station measures the availability of the channel according to the bandwidth of 10MHz, then the channels 3, 7, 11, 12 and 13 are available and idle. If the base station measures the availability of the channel according to the bandwidth of 20MHz, then only the channel 11 is available and idle.

The above example is only a simple example of the disclosure. In practical application, the unauthorized carrier channel is divided according to a nominal channel bandwidth as the measuring bandwidth, including an effective channel and a guard interval. An occupancy channel bandwidth is a bandwidth with the most of channel energy, and is usually a little bit less than the nominal channel bandwidth. The unauthorized carrier channels are allowed to be overlapped partly. For example, when the actual occupancy bandwidth is 20MHz, the channel can be divided according to the nominal channel bandwidth of 22MHz as the measuring bandwidth, and the distance between the central frequency points of the adjacent channels is 5MHz.

The network-side device measures the availability in the following modes.

1) The network-side device detects energy on one or more unauthorized carrier channels, and determines the availability of the unauthorized carrier channel according to the relationship between the detected energy and a preset threshold. For example, it is possible to perform cumulative average on received signal powers for the time period T, namely RSSI measurement. Here, an RSSI value reflects the overall interference level of the LTE system, for which a certain threshold may be set. For example, when the RSSI value is less than a first threshold, the channel is considered to be idle. When the RSSI value is greater than a third threshold, the channel is considered to be busy, so the channel is an unavailable channel.

2) The network-side device measures a co-system interference and an inter-system interference of the unauthorized carrier channel, and determines the availability of the unauthorized carrier channel according to the measured interference result.

In a method, a coherent detection is performed to an interference signal of the unauthorized carrier channel. If it is detected that the interference signal is a WiFi or radar signal or an unknown signal, it is considered that the current state of the channel is busy, and the channel is the unavailable channel. If it is detected that the interference signal is an LTE signal, it can be considered that the interference of the channel is the co-system interference, and the channel can be used properly by processing the interference. For example, an LAA receiver in the LTE system can perform a co-system signal detection, and then subtract signals sent by other co-system nodes from the received signals, so as to eliminate the interference. In another situation, if only a part of the co-system signals is detected, and the other part is inter-system signals, a threshold of the proportion of a co-system signal energy v.s. inter-system signal energy may be set. When the co-system signal energy is greater than the threshold, the interference is determined as the co-system interference. When the co-system signal energy is not greater than the threshold, the interference is determined as the inter-system interference.

In another method, the LTE system may become silent regularly or as demand, that is, the LTE system does not send any LTE signal. At this time, the interference signal obtained by measuring the unauthorized carrier channel by the network-side device is completely the inter-system interference, and the unauthorized carrier channel is considered as the unavailable channel. In such a case, the LTE system can be silent regularly or as demand in any one of manners A and B.

In the manner A, all the LAA nodes on a certain unauthorized carrier channel become silent according to a silent pattern.

In the manner B, because there is barely interference between the LAA nodes that are far apart from each other, the LAA nodes on a certain unauthorized carrier channel may be clustered according to geographical locations, and the LAA nodes in a cluster become silent according to the same silent pattern.

The silent pattern is the pattern for specifying which of the LAA nodes is/are allowed to send and which of the LAA nodes becomes/become silent. The time granularity of silence may be several consecutive frames/sub-frames/OFDM symbols or discrete frames/sub-frames/OFDM symbols. Here, the silent pattern of the LAA nodes can be repeated periodically or configured for use once.

After detecting that the interference of the unauthorized carrier channel is the co-system interference, the network-side device may also differentiate the interference signals of the LAA nodes that are deployed by different operator equipment on the unauthorized carrier channel, in the following manners.

In a manner A, the network-side device may detect and identify the received co-system interference signal, and parse operator information and cell information carried in the co-system interference signal. When the identified operator information or cell information belongs to other operators, the interference is determined as a co-system and different-operator interference. When the identified operator information or cell information belongs to the operator of the network-side device, the interference is determined as a co-system and same-operator interference.

In a manner B, the network-side device coordinates the silent patterns adopted by the LAA nodes of different operators. For example, the network-side device makes a part of the silent patterns adopted by the operator A and the operator B overlap for detecting the inter-system interference, and makes the other part not overlap for detecting the co-system and different-operator interference.

Furthermore, when synchronization between the LAA nodes of different operators cannot be ensured, the silent pattern may also be coordinated through an Open Mobile Alliance (OMA) configuration, an air interface or an inter-cell backhaul interface.

The manner 1) and manner 2) may be used in combination. The network-side device presets a first threshold, a second threshold and a third threshold, and detects the energy on one or more unauthorized carrier channels. When the detected energy is less than the first threshold, the unauthorized carrier channel is considered as the directly available channel. When the detected energy is greater than the first threshold and less than the second threshold, the co-system interference and the inter-system interference of the unauthorized carrier channel are measured. The availability of the unauthorized carrier channel is determined according to the measured interference result. When the detected energy is greater than the third threshold, the unauthorized carrier channel is considered as the unavailable channel. For example, the availability can be measured by using both the RSSI threshold and the inter-system/co-system interference, in the following manners.

1) When the RSSI value is less than the first threshold, it is considered that the channel is idle, and the unauthorized carrier channel is the directly available channel.

2) When the RSSI value is greater than the first threshold and less than the second threshold, an inter-system/co-system interference measurement is performed on the unauthorized carrier channel.
For example, the inter-system/co-system interference measurement can be performed by receiving the interference signals coherently or making the LTE system become silent. When the interferences are from different systems, it is considered that the current state of the channel is busy, and the unauthorized carrier channel is the unavailable channel. When the interferences are from the same system, it is considered that the unauthorized carrier channel is the conditionally available channel.

3) When the RSSI value is greater than the third threshold, it is considered that the current state of the channel is busy, and the unauthorized carrier channel is the unavailable channel.

For example, the first threshold may be ranged from -80dBm to -90dBm, the second threshold may be ranged from -50dBm to -60dBm, and the third threshold may be ranged from -20dBm to -30dBm.

The directly available channel and the conditionally available channel may be unified as the available channel. The available channel and the unavailable channel may be marked with different markers. For example, the available channel and the unavailable channel are marked with 0 and 1. Alternatively, the directly available channel, the conditionally available channel and the unavailable channel may be marked with different markers. For example, the directly available channel, the conditionally available channel and the unavailable channel are marked with 0, 1, and 2 respectively.

In the step, the determination of the available channel of the unauthorized carrier may be made by the base station needing to use the channel. Alternatively, the determination may be made by a certain central base station or network node, which then informs other base stations or network nodes of the available channel.

In a step 102, the network-side device instructs the UE to measure the available channel.

Here, the network-side device may send a measurement reference signal to the UE during the time period of occupying the available channel, so as to instruct the UE to measure the available channel according to the measurement reference signal.

Specifically, the network-side device obtains the right to use the determined available channel directly or by means of competition. After obtaining the right of use, the network-side device enters the time period of occupying the available channel. During the time period, the network-side device may send a downlink control signal separately or together with activation signaling of a Slave cell (Scell), send the measurement reference signal to the UE, and schedule the UE to report CSI measurement and RRM measurement. Before the UE reports the measurement result according to the measurement reference signal, the network-side device sends data in a conservative sending mode or a low-level modulation coding mode, such as diversity sending and Binary Phase Shift Keying (BPSK) modulation mode. When the measurement result reported by the UE is received, the network-side device selects the corresponding sending mode and modulation coding level to send the data.

Between the step 101 and the step 102, after the network-side device determines the available channel of the unauthorized carrier, if the regional regulation allows the sending of SCS, the network-side device may send the measurement reference signal in form of SCS to the UE during the time period of not occupying the available channel, that is, before the Scell obtains the right to use the available channel. The measurement reference signal in form of SCS includes: PSS/SSS, CRS, CSI-RS, or the like. The measurement reference signal in form of SCS is called Unlicensed Carrier Discovery Signal (UCDS). The UE can use these measurement reference signals in form of SCS to obtain synchronization parameters, perform CSI measurement and RRM measurement (including the RSRP and RSRQ measurements), so that the network-side device may quickly use the corresponding CSI measurement to schedule and send data quickly and accurately after obtaining the right to use the available channel.

Note that, the SCS mentioned in the embodiment of the disclosure is not only the SCS in specifications of European Telecommunication Standards Institute (ETSI), but generally refers to short-time signals and channels sent in a special duration of the time period of not occupying the available channel. When the signals and channels are sent in the duration of SCS, the LAA access point has no need to execute a Clear Channel Assessment (CCA) and LBT function. The duration of sending the SCS needs to meet a certain regulatory requirement, or else, the principle of friendly coexistence among different systems and devices on the unauthorized frequency bands is violated. Some countries and regions may have other names and definitions of the SCS, but here they are collectively called SCS. Some countries and regions may not define the SCS, and for these countries and regions, the SCS and similar rule requirements (for example, a requirement for the duration of sending, and a requirement that the duration of sending is not allowed to be greater than a set proportion in an observation period with a fixed duration) may be defined to send the signals in the time period of not occupying the available channel.

The network-side device configures the sending of the UCDS of the Scell through the Pcell, and indicates the sending configuration of the UCDS to the UE through the Pcell. The sending configuration of the UCDS may include one or more of: carrier center frequency, channel bandwidth, PSS/SSS sequence information, CRS sequence information, CSI-RS sequence information, CSI-RS configuration, and so on.

Even if the regional regulation allows the sending of SCS, when the network-side device sends the measurement reference signal in form of SCS through the available channel, the available channel may still be occupied by other systems, for example, the radar system. In such a case, the sending of the measurement reference signal in form of SCS has to be interrupted. The network-side device may uninterruptedly determine an available state of the available channel. Then the network-side device implicitly informs the UE of the sending situation of the measurement reference signal in form of SCS through the available state of the available channel. Alternatively, the network-side device may send the downlink control signal to the UE through the Pcell to explicitly inform the UE of the sending situation of the measurement reference signal in form of SCS.

The implicitly informing is implemented as follows.

When the available state of the available channel is the disabled state, the network-side device informs the UE not to send the measurement reference signal in form of SCS in the present moment. When the available state of the available channel is the normal use state, the network-side device informs the UE to normally send the measurement reference signal in form of SCS in the present moment.

The explicitly informing is implemented as follows.

The network-side device may send the downlink control signal through the Pcell to inform the UE of the sending situation of the measurement reference signal in form of SCS. The modes that can be adopted are as follows.

1) At a time point which is an integral multiple of time periods of sending the measurement reference signal in form of SCS, the network-side device informs whether to send the measurement reference signal in form of SCS in the next period of time. For example, the time period of sending the measurement reference signal in form of SCS is T, an informing signal may be sent with a time interval of N*T to indicate whether to send the measurement reference signal in form of SCS in the next period of N*T time.

2) At a time point which is an integral multiple of time periods of sending the measurement reference signal in form of SCS, the network-side device checks whether the sending situation of the measurement reference signal in form of SCS will change in the next period of time. If the sending situation changes in the next period of time, for example, the sending changes from being not allowed to being allowed, or changes from being allowed to being not allowed, the network-side device indicates to the UE that the sending situation of the measurement reference signal in form of SCS changes. If the sending situation does not change in the next period of time, the network-side device does not perform indication.

3) It is defaulted that the sending of the measurement reference signal in form of SCS is allowed. Only when the sending is not allowed, the network-side device informs the UE that the sending of the measurement reference signal in form of SCS is stopped. The duration Tstop of stopping the sending may be appointed, or the network-side device informs the exact duration of stopping the sending while informing the stopping is stopped.

The method of the present embodiment further includes that: the UE measures the available channel of the unauthorized carrier according to the measurement reference signal issued by the network-side device, and smoothes the measurement result and reports the smoothed measurement result to the network-side device.

The measurement reference signal cannot be sent continuously on the unauthorized carrier, and even cannot be sent for a long time. Thus, the statistical time of measurement of the UE may be counted according to a time period for occupying the available channel of the unauthorized carrier for each occupying or a shorter time period, and the measurement result of the period of occupying the available channel for the current occupying may be reported by means of the authorized carrier or the unauthorized carrier during the time period of occupying the available channel for the current occupying. For example, if the time period of reporting the RRM measurement result by the UE is $T\_report$, the first reporting time is T0, the time period of occupying the available channel is $T\_occupy$, then the UE may perform M reports at the following points in time:

$$T0+T\_report, T0+2*T\_report, …, T0+M*T\_report,$$

where $T0+M)*T\_report <= T\_occupy <= T0+(M+1)*T\_report$.

If $T\_occupy < T\_report$, that is, the UE fails in a successful report during the time period of occupying the available channel, then UE may measure all the measurement reference signals during the time period of occupying the available channel. Then the UE may report the measurement result by means of the authorized carrier or other unauthorized carriers at the end of the present period of the current occupying.

For the last measurement which is not completed in the time period of occupying the available channel, the UE may measure all the rest measurement reference signals in the time period of occupying the available channel, and report the measurement by means of the authorized carrier at the end of the present period of the current occupying.

If the UE measures the available channel only during the time period of occupying the available channel, then there are only the measurement results of the time period of occupying the available channel. These measurement results of the time period of occupying the available channel may be smoothed.

If the UE measures the available channel during both the time period of occupying the available channel and the time period of not occupying the available channel, then the measurement results of the time period of occupying the available channel and the time period of not occupying the available channel may be smoothed in any one of the following manners 1)-2).

1) The measurement result of the time period of occupying the available channel is smoothed separately to obtain a measurement result of a long period of occupancy. The measurement result of the time period of not occupying the available channel is smoothed separately to obtain a measurement result of a long period of non-occupancy. Here, the measurement result of the time period of occupying the available channel is smoothed separately. For example, the historical measurement result of the time period of occupying the available channel which is obtained by statistics currently is $R\_pre$, the measurement result of the present period of occupancy is $R\_occupy$, and a smoothing weighting factor is a. In such a case, the measurement result of this time can be smoothed according to the following formula:

$$R\_pre = (1-a)*R\_pre + a*R\_occupy.$$

Note that, for the first measurement result, $R\_pre = R\_occupy$.
The measurement result of the time period of not occupying the available channel is smoothed separately. For example, the historical measurement result of the time period of not occupying the available channel which is obtained by statistics currently is R_pre, the measurement result of the present period of non-occupancy is R_non_occupy, the smoothing weighting factor is a. In such a case, the measurement result of this time can be smoothed according to the following formula:

$$R\_pre = (1-a)*R\_pre + a*R\_non\_occupy.$$

Note that, for the first measurement result, R_pre = R_non_occupy.

2) The measurement results of the time period of occupying the available channel and the time period of not occupying the available channel are smoothed together through different weighting factors. Specifically, the weighting factors may be used for the measurement results of the time period of occupying the available channel and the time period of not occupying the available channel, so as to adjust the weight of the measurement result of the time period of occupying the available channel and the weight of the measurement result of the time period of not occupying the available channel.

For example, the historical measurement result of the time period of not occupying the available channel which is obtained by statistics currently is P_pre. If the present measurement result is the measurement result R_occupy of the time period of occupying the available channel, and the weighting factor of the time period of occupying the available channel is a, then the measurement result of this time can be smoothed according to the following formula: R_next = (1-a)*R_pre + a*R_occupy. If the present measurement result is the measurement result R_non_occupy of the time period of not occupying the available channel, and the weighting factor of the time period of not occupying the available channel is b, then the measurement result of this time can be smoothed according to the following formula: R_next = (1-b)*R_pre + b*R_non_occupy.

Note that, for the first measurement result, if the first measurement result is the measurement result R_occupy of the time period of occupying the available channel, then R_pre = R_occupy. If the first measurement result is the measurement result R_non_occupy of the time period of not occupying the available channel, then P_pre = R_non_occupy.

Moreover, during the time period of occupying the available channel of the unauthorized carrier, the network-side device still continues detecting the available state and the availability of all the unauthorized carrier channels, and maintains the list of available channels. When detecting the availability of all the unauthorized carrier channels, the network-side device may measure the availability of all the unauthorized carrier channels according to the fixed measuring bandwidth or the variable measuring bandwidth, and maintain the list of available channels.

The network-side device may also fast switch to the other channels according to the list of available channels when determining, according to the measurement result reported by the UE, that the channel state of the unauthorized carrier channel being occupied deteriorates(for example, the Signal Interference Noise Ratio (SINR) reflected by the current CSI measurement result is less than a certain threshold and/or the RSRQ value is less than a certain threshold, or the difference between the RSRQ measurement value of the unauthorized carrier channel and the RSRQ measurement value of other channel is greater than a certain threshold).

When uplink transmission on the unauthorized carrier is supported, the network-side device may also measures uplink measurement signals discontinuously sent by the UE. For example, the network-side device measures a Sounding Reference Signal (SRS).

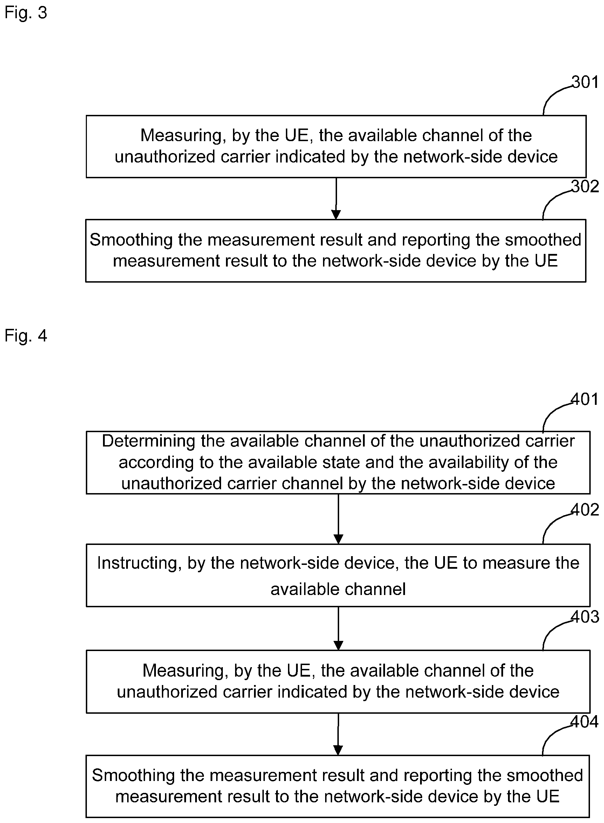

Based on the above method, the embodiment of the disclosure also provides a measuring method for an unauthorized carrier. As shown in Fig. 3, the method includes the following steps.

In a step 301, the UE measures the available channel of the unauthorized carrier indicated by the network-side device;

Specifically, the UE receives the measurement reference signals discontinuously issued by the network-side device, and measures the available channel of the unauthorized carrier according to the measurement reference signal.

In a step 302, the UE smoothes the measurement result and reports the smoothed measurement result to the network-side device.

Specifically, the UE performs statistics on the measurement results according to the time of occupying the available channel of the unauthorized carrier or appointed time. Then the UE reports the measurement result of the time period of occupying the available channel via an authorized carrier or the unauthorized carrier during the time period of occupying the available channel. For example, if the period of reporting the RRM measurement result by the UE is T_report, the first reporting time is T0, the time period of occupying the available channel is T_occupy, then the UE can perform M reports at the following points in time:

## T0+T_report, T0+2*T_report, …, T0+M*T_report,

where TO+M*T_report <= T_occupy <= T0+(M)+1)*T_report.

If T_occupy < T_report, that is, the UE fails in a successful report during the time period of occupying the available channel, then UE can measure all the measurement reference signals during the time period of occupying the available channel, and report the measurement result by means of the authorized carrier or other unauthorized carriers at the end of the present period of occupancy.

For the last measurement which is not completed in the time period of occupying the available channel, the UE can measure all the rest measurement reference signals in the time period of occupying the available channel, and report the measurement by means of the authorized carrier at the end of the present period of occupancy.

If the UE measures the available channel only during the time period of occupying the available channel, then there are only the measurement results of the time period of occupying the available channel, and these measurement results of the time period of occupying the available channel can be smoothed.

If the UE measures the available channel during both the time period of occupying the available channel and the time period of not occupying the available channel, then the measurement results of the time period of occupying the available channel and the time period of not occupying the available channel can be smoothed in any one of the manners 1)-2).

1) The measurement result of the time period of occupying the available channel is smoothed separately to obtain a measurement result of a long period of occupancy. The measurement result of the time period of not occupying the available channel is smoothed separately to obtain a measurement result of a long period of non-occupancy.

Here, the measurement result of the time period of occupying the available channel is smoothed separately. For example, the historical measurement result of the time period of occupying the available channel which is obtained by statistics currently is R_pre. If the measurement result of the present period of occupancy is R_occupy, a smoothing weighting factor is a, then the measurement result of this time may be smoothed according to the following formula: R_pre = (1-a)*R_pre + a*R_occupy.

Note that, for the first measurement result, R_pre = R_occupy.

The measurement result of the time period of not occupying the available channel is smoothed separately. For example, the historical measurement result of the time period of not occupying the available channel which is obtained by statistics currently is R_pre. If the measurement result of the present period of non-occupancy is R_non_occupy, the smoothing weighting factor is a, then the measurement result of this time may be smoothed according to the following formula: R_pre = (1-a)*R_pre + a*R_non_occupy.

Note that, for the first measurement result, R_pre = R_non_occupy.

2) The measurement results of the time period of occupying the available channel and the time period of not occupying the available channel are smoothed together through different weighting factors. Specifically, the weighting factors may be used for the measurement results of the time period of occupying the available channel and the time period of not occupying the available channel, so as to adjust the weight of the measurement result of the time period of occupying the available channel and the weight of the measurement result of the time period of not occupying the available channel.

For example, the historical measurement result of the time period of not occupying the available channel which is obtained by statistics currently is P_pre. If the present measurement result is the measurement result of the time period of occupying the available channel R_occupy, and the weighting factor of the time period of occupying the available channel is a, then the measurement result of this time can be smoothed according to the following formula: R_next = (1-a)*R_pre + a*R_occupy. If the present measurement result is the measurement result of the time period of not occupying the available channel R_occupy, and the weighting factor of the time period of not occupying the available channel is b, then the measurement result of this time can be smoothed according to the following formula: R_next = (1-b)*R_pre + b*R_non_occupy.

Note that, for the first measurement result, if the first measurement result is the measurement result of the time period of occupying the available channel R_occupy, then R_pre = R_occupy. If the first measurement result is the measurement result of the time period of not occupying the available channel, then P_pre = R_non_occupy.

Based on the above method, the embodiment of the disclosure also provides a measuring method for an unauthorized carrier. As shown in Fig. 4, the method includes the following steps.

In a step 401, the network-side device determines the available channel of the unauthorized carrier according to the available state and the availability of the unauthorized carrier channel.

In a step 402, the network-side device instructs the UE to measure the available channel.

In a step 403, the UE measures the available channel of the unauthorized carrier indicated by the network-side device.

In a step 404, the UE smoothes the measurement result and reports the smoothed measurement result to the network-side device.

The step 401 is the same as the step 101, the step 402 is the same as the step 102, the step 403 is the same as the step 301, and the step 404 is the same as the step 302.

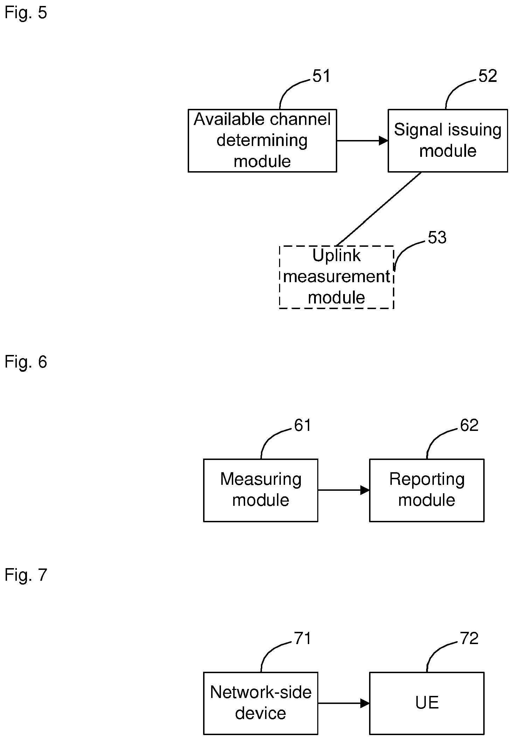

In order to implement the above method, the disclosure also provides a network-side device. As shown in Fig. 5, the network-side device includes: an available channel determining module 51 and a signal issuing module 52.

The available channel determining module 51 may be realized by a processor, and is configured to determine the available channel of the unauthorized carrier according to the available state and the availability of the unauthorized carrier channel.

The signal issuing module 52 may be realized by a communication chip, and is configured to instruct the UE to measure the available channel.

The signal issuing module 52 is specifically configured to send the measurement reference signal to the UE during the time period of occupying the available channel.

The available channel determining module 51 is specifically configured to determine the available state of the unauthorized carrier channel as a target according to the regional regulatory requirement. After determining the available state of the unauthorized carrier channel is the normal used state, available channel determining module 51 measures the availability of the unauthorized carrier channel according to the fixed measuring bandwidth or the variable measuring bandwidth, so as to obtain the available channel according to the measurement. The available channels include the directly available channel and the conditionally available channel. The available channels may be formed into a list of available channels.

The network-side device measures the availability of the unauthorized carrier channel according to the fixed measuring bandwidth or the variable measuring bandwidth in any one of the following modes 1 and 2.

In the mode 1, the network-side device measures the availability of the unauthorized carrier channel according to the fixed measuring bandwidth.

The network-side device may predetermine the measuring bandwidth W1 according to the data sending requirement. For example, the W1 may be selected as one of 1.4MHz, 3MHz, 5MHz, 10MHz, 15MHz and 20MHz, or other proper bandwidths serve as the measuring bandwidth. Then the network-side device measures the availability of the unauthorized carrier channel according to the measuring bandwidth.

In the mode 2, the network-side device measures the availability of the unauthorized carrier channel according to the variable measuring bandwidth.

The network-side device may adjust the measuring bandwidth W1 to W2, ..., Wn, and measure the availability of the unauthorized carrier channel according to W2, ..., Wn. The W, W2, ..., Wn are different values.

The network-side device measures the availability in the following modes 1) or 2).

1) The network-side device detects the energy on one or more unauthorized carrier channels. Then the network-side device determines the availability of the unauthorized carrier channel according to the relationship between the detected energy and the preset threshold. For example, it is possible to perform cumulative average on received signal powers for a time period T, namely RSSI measurement. Here, the RSSI value reflects the overall interference level of the LTE system. A certain threshold may be set. For example, when the RSSI value is less than the first threshold, the channel is considered to be idle. When the RSSI value is greater than the third threshold, the channel is considered to be busy, so it is an unavailable channel.

2) The network-side device measures the co-system interference and the inter-system interference of the unauthorized carrier channel, and determines the availability of the unauthorized carrier channel according to the measured interference result.

In a method, the coherent detection is performed on the interference signal of the unauthorized carrier channel. If it is detected that the interference signal is the WiFi signal, radar signal or the unknown signal, it is considered that the current state of the channel is busy, and the channel is the unavailable channel. If it is detected that the interference signal is the LTE signal, it may be considered that the interference of the channel is the co-system interference, and the channel may be used properly by processing the interference. For example, the LAA receiver in the LTE system may perform the co-system signal detection, and then subtract signals sent by other co-system nodes from the received signals, so as to eliminate the interference. In another situation where only a part of the co-system signals is detected and the other part is inter-system signals, a threshold of the proportion of the co-system signal energy v.s. inter-system signal energy may be set. When the co-system signal energy is greater than the threshold, the interference is determined as the co-system interference. When the co-system signal energy is not greater than the threshold, the interference is determined as the inter-system interference.

In another method, the LTE system may become silent regularly or as demand. That is, the LTE system does not send any LTE signal. In such a case, the interference signal obtained by measuring the unauthorized carrier channel by the network-side device is completely the inter-system interference.

The mode 1) and mode 2) may be used in combination. The network-side device presets the first threshold, the second threshold and the third threshold, and detects the energy on one or more unauthorized carrier channels. When the detected energy is less than the first threshold, the unauthorized carrier channel is considered as the directly available channel. When the detected energy is greater than the first threshold and less than the second threshold, the co-system interference and the inter-system interference of the unauthorized carrier channel are measured, and the availability of the unauthorized carrier channel is determined according to the measured interference result. When the detected energy is greater than the third threshold, the unauthorized carrier channel is considered as the unavailable channel. For example, the availability may be measured by using both the RSSI threshold and the inter-system/co-system interference, including the following steps 1) - 3).

In the step 1), when the RSSI value is less than the first threshold, it is considered that the channel is idle, and the unauthorized carrier channel is the directly available channel.

In the step 2), when the RSSI value is greater than the first threshold and less than the second threshold, an inter-system/co-system interference measurement is performed to the unauthorized carrier channel.

For example, the inter-system/co-system interference measurement may be performed by receiving the interference signals coherently or making the LTE system become silent. If the interferences are from different systems, it is considered that the current state of the channel is busy, and the unauthorized carrier channel is the unavailable channel. If the interferences are from the same system, it is considered that the unauthorized carrier channel is the conditionally available channel.

In the step 3), when the RSSI value is greater than the third threshold, it is considered that the current state of the channel is busy, and the unauthorized carrier channel is the unavailable channel.

The first threshold is less than the second threshold, and the second threshold is less than the third threshold.

The directly available channel and the conditionally available channel may be generally referred to as the available channel. The available channel and the unavailable channel may be marked with different markers. For example, the available channel and the unavailable channel are marked with 0 and 1 respectively. Alternatively, the directly available channel, the conditionally available channel and the unavailable channel may be marked with different markers. For example, the directly available channel, the conditionally available channel and the unavailable channel are marked with 0, 1, and 2 respectively.

The signal issuing module 52 is specifically configured to obtain the right to use the determined available channel directly or by means of competition. After obtaining the right of use, the signal issuing module enters the time period of occupying the available channel. During the time period, the signal issuing module may send the downlink control signal separately or together with the activation signaling of the Scell, send the measurement reference signal to the UE by carrying the measurement reference signal in the downlink control signal, and schedule the UE to report CSI measurement and RRM measurement. Before the UE reports the measurement result according to the measurement reference signal, the signal issuing module sends data in the conservative sending mode or the low-level modulation coding mode, such as diversity sending and the BPSK modulation mode. After receiving the measurement result reported by the UE, the signal issuing module selects the corresponding sending mode and modulation coding level according to the measurement result reported by the UE, to send data.

The signal issuing module 52 is further configured to, when the regional regulation allows the sending of SCS, send the measurement reference signal in form of SCS to the UE during the time period of not occupying the available channel, that is, before the Scell obtains the right to use the available channel. The measurement reference signal in form of SCS includes: PSS/SSS, CRS, CSI-RS, or the like. The measurement reference signal in form of SCS is called UCDS.

The signal issuing module 52 is further configured to configure the sending of the UCDS of the Scell through the Pcell, and indicate the sending configuration of the UCDS to the UE through the Pcell. The sending configuration of the UCDS may include one or more of carrier center frequency, channel bandwidth, PSS/SSS sequence information, CRS sequence information, CSI-RS sequence information, CSI-RS configuration, and so on.

Even if the regional regulation allows the sending of SCS, when the network-side device sends the measurement reference signal in form of SCS through the available channel, the available channel may still be occupied by other systems, for example, the radar system. In such a case, the sending of the measurement reference signal in form of SCS has to be interrupted. The signal issuing module 52 is further configured to implicitly inform the UE of the sending situation of the measurement reference signal in form of SCS through the available state of the available channel. Alternatively, the signal issuing module 52 is configured to send the downlink control signal to the UE through the Pcell to explicitly inform the UE of the sending situation of the measurement reference signal in form of SCS.

The implicitly informing mode is as follows.

When the available state of the available channel is the disabled state, the network-side device informs the UE not to send the measurement reference signal in form of SCS in the present moment. When the available state of the available channel is the normal use state, the network-side device informs the UE to normally send the measurement reference signal in form of SCS in the present moment.

The explicitly informing mode is as follows.

The network-side device may send the downlink control signal through the Pcell to inform the UE of the sending situation of the measurement reference signal in form of SCS. The modes that may be adopted are as follows.

1) At a time point which is an integral multiple of time periods of sending the measurement reference signal in form of SCS, the network-side device informs whether to send the measurement reference signal in form of SCS in the next period of time. For example, the time period of sending the measurement reference signal in form of SCS is T, an informing signal may be sent with a time interval of N*T to indicate whether to send the measurement reference signal in form of SCS in the next period of N*T time.

2) At a time period which is an integral multiple of time periods of sending the measurement reference signal in form of SCS, the network-side device checks whether the sending situation of the measurement reference signal in form of SCS will change in the next period of time. If the sending situation changes in the next period of time, for example, the sending changes from being not allowed to being allowed, or changes from being allowed to being not allowed, the network-side device indicates to the UE that the sending situation of the measurement reference signal in form of SCS changes. If the sending situation does not change in the next period of time, the network-side device does not perform indication.

3) It is defaulted that the sending of the measurement reference signal in form of SCS is allowed. Only when the sending is not allowed, the network-side device informs the UE that the sending of the measurement reference signal in form of SCS is stopped. The duration Tstop of stopping the sending may be appointed, or the network-side device informs the exact duration of stopping the sending while informing the stopping is stopped.

The available channel determining module 51 is further configured to still continue detecting the available state and the availability of all the unauthorized carrier channels during the time period of occupying the available channel of the unauthorized carrier, maintain the list of available channels. When determining, according to the measurement result reported by the UE, that the channel state of the unauthorized carrier channel being occupied deteriorates, the available channel determining module 51 switches to the other channels according to the list of available channels .

The network-side device further includes an uplink measuring module 53, which is configured to, when the uplink transmission on the unauthorized carrier is supported, measure the uplink measurement signals discontinuously sent by the UE.

In practical application, the uplink measuring module 53 may be realized by the processor in combination with the communication chip.

Based on the above network-side device, the embodiment of the disclosure also provides a UE. As shown in Fig. 6, the UE includes a measuring module 61 and a reporting module 62.

The measuring module 61 may be realized by a signal detecting chip of the UE, and is configured to measure the available channel of the unauthorized carrier indicated by the network-side device.

The reporting module 62 may be realized by a communication chip of the UE, and is configured to smooth the measurement result report the smoothed measurement result to the network-side device.

The measuring module 61 is specifically configured to measure the available channel of the unauthorized carrier according to the measurement reference signal issued by the network-side device.

The reporting module 62 is configured to perform statistics on the measurement results according to the time period of occupying the available channel of the unauthorized carrier for each occupying or a specified time period. The measurement result of the period of occupying the available channel for the current occupying is reported by means of the authorized carrier or the unauthorized carrier during the time period of occupying the available channel this time.

The reporting module 62 is further configured to, when failing in a successful report during the time period of occupying the available channel, inform the measuring module 61 to measure all the measurement reference signals during the time period of occupying the available channel. The reporting module 62 is further configured to report the measurement result by means of the authorized carrier or other unauthorized carriers at the end of the present period of occupancy.

The reporting module 62 is further configured to, for the last measurement which is not completed in the time period of occupying the available channel, inform the measuring module 61 to measure all the rest measurement reference signals in the time period of occupying the available channel, and report the measurement by means of the authorized carrier at the end of the present period of occupancy.

The reporting module 62 is specifically configured to, after the measuring module 61 has measured both the time period of occupying the available channel and the time period of not occupying the available channel, smooth the measurement results of the time period of occupying the available channel and the time period of not occupying the available channel in any one of the following manners 1) and 2).

1) The measurement result of the time period of occupying the available channel is smoothed separately to obtain a measurement result of a long period of occupancy. The measurement result of the time period of not occupying the available channel is smoothed separately to obtain a measurement result of a long period of non-occupancy. Here, the measurement result of the time period of occupying the available channel is smoothed separately. For example, the historical measurement result of the time period of occupying the available channel which is obtained by statistics currently is R_pre, the measurement result of the present period of occupancy is R_occupy, a smoothing weighting factor is a. In such a case, the measurement result of this time may be smoothed according to the following formula:

$$R\_pre = (1\text{-}a)^*R\_pre + a^*R\_occupy.$$

Note that, for the first measurement result, R_pre = R_occupy.

The measurement result of the time period of not occupying the available channel is smoothed separately. For example, the historical measurement result of the time period of not occupying the available channel which is obtained by statistics currently is R_pre, the measurement result of the present period of non-occupancy is R_non_occupy, the smoothing weighting factor is a. In such a case, the measurement result of this time may be smoothed according to the following formula:

$$R\_pre = (1\text{-}a)^*R\_pre + a^*R\_non\_occupy.$$

Note that, for the first measurement result, R_pre = R_non_occupy.

2) The measurement results of the time period of occupying the available channel and the time period of not occupying the available channel are smoothed together through different weighting factors. Specifically, the weighting factors may be used for the measurement results of the time period of occupying the available channel and the time period of not occupying the available channel, so as to adjust the weight of the measurement result of the time period of occupying the available channel and the weight of the measurement result of the time period of not occupying the available channel.

For example, the historical measurement result of the time period of not occupying the available channel which is obtained by statistics currently is P_pre, the present measurement result is the measurement result R_occupy of the time period of occupying the available channel, and the weighting factor of the time period of occupying the available channel is a. In such a case, the measurement result of this time may be smoothed according to the following formula: R_next = (1-a)*R_pre + a*R_occupy. When the present measurement result is the measurement result R_non_occupy of the time period of not occupying the available channel, and the weighting factor of the time period of not occupying the available channel is b, the measurement result of this time may be smoothed according to the following formula: R_next = (1-b)*R_pre + b*R_non_occupy.

Note that, for the first measurement result, if the first measurement result is the measurement result R_occupy of the time period of occupying the available channel, then R_pre = R_occupy. If the first measurement result is the measurement result of the time period of not occupying the available channel, then P_pre = R_non_occupy.

Based on the network-side device and the UE, the disclosure also provides a system for measuring an unauthorized carrier. As shown in Fig. 7, the system includes the network-side device 71 and the UE 72.

The network-side device 71 is configured to determine the available channel of the unauthorized carrier according to the available state and the availability of the unauthorized carrier channel, and instruct the UE 72 to measure the available channel.

The UE 72 is configured to measure the available channel of the unauthorized carrier indicated by the network-side device, and smooth the measurement result and report the smoothed measurement result to the network-side device 71.

The network-side device 71 is configured to send the measurement reference signal to the UE 72 during the time period of occupying the available channel, so as to instruct the UE 72 to measure the available channel according to the measurement reference signal.

Correspondingly, the UE 72 is specifically configured to measure the available channel of the unauthorized carrier according to the measurement reference signal issued by the network-side device 71.

The network-side device 71 is specifically configured to determine the available state of the unauthorized carrier channel as a target according to the regional regulatory requirement. The network-side device 71 is further configured to, after determining the available state of the unauthorized carrier channel is the normal used state, measure the availability of the unauthorized carrier channel according to the fixed measuring bandwidth or the variable measuring bandwidth, so as to obtain the available channel according to the measurement.

The network-side device 71 measures the availability by any one of the following manners 1)-3).

1) The energy is detected on one or more unauthorized carrier channels, and the availability of the unauthorized carrier channel is determined according to the relationship between the detected energy and the preset threshold.

2) The co-system interference and the inter-system interference of the unauthorized carrier channel are measured, and the availability of the unauthorized carrier channel is determined according to the measured interference result. When it is detected that the interference signals are the inter-system signals, the unauthorized carrier channel is considered as the unavailable channel. When it is detected that the interference signals are the co-system signals, the unauthorized carrier channel is considered as the available channel. When it is detected that a part of the interference signals is the co-system signals, and that the other part of the interference signals is the inter-system signals, according to the preset threshold of the proportion of the co-system signal energy v.s. inter-system signal energy, when the co-system signal energy is greater than the threshold, the interference is determined as the co-system interference, and the unauthorized carrier channel is considered as the available channel. When the co-system signal energy is not greater than the threshold, the interference is determined as the inter-system interference, and the unauthorized carrier channel is considered as the unavailable channel. When the interference signal during silence of a system is detected, the interference is determined as the inter-system interference, and the unauthorized carrier channel is considered as the unavailable channel.

3) The first threshold, the second threshold and the third threshold are preset, and the energy is detected on one or more unauthorized carrier channels. When the detected energy is less than the first threshold, the unauthorized carrier channel is considered as the directly available channel. When the detected energy is greater than the first threshold and less than the second threshold, the co-system interference and the inter-system interference of the unauthorized carrier channel are measured. The availability of the unauthorized carrier channel is determined according to the measured interference result. When the detected energy is greater than the third threshold, the unauthorized carrier channel is considered as the unavailable channel.

Specifically, a specific structure of the network-side device 71 is shown in Fig. 5, and a specific structure of the UE 72 is shown in Fig. 6.

Those ordinary skill in the art will understand that all or part of the steps in the method may be performed by hardware related to program instructions. The program instructions may be stored in computer-readable storage medium. When the program instructions are executed, the steps in the embodiments of the method are performed. The storage medium may include a mobile storage device, an ROM, a magnetic disk, a compact disk, or other medium capable of storing program codes.

Correspondingly, the embodiment of the disclosure also provides a computer storage medium having stored thereon a computer program for performing the measuring method for an unauthorized carrier of the steps 101-102.

The embodiment of the disclosure also provides another computer storage medium having stored thereon a computer program for performing the measuring method for an unauthorized carrier of the steps 301-302.

The above are only the preferred embodiments of the disclosure and not intended to limit the scope of protection of the disclosure. Any modifications, equivalent replacements, improvements and the like within the spirit and principle of the disclosure shall fall within the scope of protection of the disclosure.

**Claims**

1. A measuring method for an unauthorized carrier, comprising:

determining, by a network-side device, an available channel of an unauthorized carrier according to an available state and the availability of an unauthorized carrier channel, and instructing a User Equipment, UE, to measure the available channel.

**2.** The measuring method according to claim 1, wherein instructing the UE to measure the available channel comprises: sending a measurement reference signal to the UE during the time period of occupying the available channel, so as to instruct the UE to measure the available channel according to the measurement reference signal.

**3.** The measuring method according to claim 1 or 2, wherein determining, by the network-side device, the available channel of the unauthorized carrier according to the available state and the availability of the unauthorized carrier channel comprises:

determining, by the network-side device, the available state of the unauthorized carrier channel as a target according to a regional regulatory requirement, and after determining the available state of the unauthorized carrier channel is a normal used state, measuring the availability of the unauthorized carrier channel according to a fixed measuring bandwidth or a variable measuring bandwidth, so as to obtain the available channel according to the measurement.

**4.** The measuring method according to claim 3, wherein measuring the availability of the unauthorized carrier channel according to the fixed measuring bandwidth or the variable measuring bandwidth comprises:

predetermining, by the network-side device, a measuring bandwidth W1 according to a data sending requirement, and measuring the availability of the unauthorized carrier channel according to the measuring bandwidth W1; or adjusting, by the network-side device, the measuring bandwidth W1 to W2, ..., Wn, and measuring the availability of the unauthorized carrier channel according to W2, ..., Wn, wherein the W, W2, ..., Wn are different values.

**5.** The measuring method according to claim 4, wherein measuring the availability comprises any one of:

1) detecting, by the network-side device, an energy on one or more unauthorized carrier channels, and determining the availability of the unauthorized carrier channel according to the relationship between the detected energy and a preset threshold;
2) measuring, by the network-side device, a co-system interference and an inter-system interference of the unauthorized carrier channel, and determining the availability of the unauthorized carrier channel according to the measured interference result; when it is detected that interference signals are inter-system signals, considering the unauthorized carrier channel as an unavailable channel; when it is detected that interference signals are co-system signals, considering the unauthorized carrier channel as an available channel; when it is detected that a part of the interference signals is the co-system signals, and the other part of the interference signals is the inter-system signals, according to the preset threshold of the proportion of a co-system signal energy v.s. inter-system signal energy, when the co-system signal energy is greater than the threshold, determining the interference as the co-system interference, and considering the unauthorized carrier channel as the available channel; when the co-system signal energy is not greater than the threshold, determining the interference as the inter-system interference, and considering the unauthorized carrier channel as the unavailable channel; when the interference signal during silence of a system is detected, determining the interference as the inter-system interference, and considering the unauthorized carrier channel as the unavailable channel;
3) presetting, by the network-side device, a first threshold, a second threshold and a third threshold, and detecting the energy on one or more unauthorized carrier channels; when the detected energy is less than the first threshold, considering the unauthorized carrier channel as the directly available channel; when the detected energy is greater than the first threshold and less than the second threshold, measuring the co-system interference and the inter-system interference of the unauthorized carrier channel, and determining the availability of the unauthorized carrier channel according to the measured interference result; when the detected energy is greater than the third threshold, considering the unauthorized carrier channel as the unavailable channel.

**6.** The measuring method according to claim 2, further comprising: sending, by the network-side device, a measurement reference signal in form of Short Control Signaling, SCS, to the UE during the time period of not occupying the available channel.

**7.** The measuring method according to claim 6, further comprising: when sending the measurement reference signal in form of short control signaling, SCS, to the UE during the time period of not occupying the available channel, implicitly informing, by the network-side device, the UE of the sending situation of the measurement reference signal in form of SCS through an available state of the available channel, or explicitly inform the UE of the sending situation of the measurement reference signal in form of SCS by sending a downlink control signal to the UE through a Primary Cell, Pcell.

8. The measuring method according to claim 2, further comprising: still continuing, by the network-side device, detecting the available state and the availability of all the unauthorized carrier channels during the time period of occupying the available channel of the unauthorized carrier, maintaining a list of available channels, and when determining, according to the measurement result reported by the UE, that the channel state of the unauthorized carrier channel being occupied deteriorates, switching to the other channels according to the list of available channels.

9. The measuring method according to claim 1, further comprising: when uplink transmission on the unauthorized carrier is supported, measuring, by the network-side device, uplink measurement signals discontinuously sent by the UE.

10. A measuring method for an unauthorized carrier, comprising:

measuring, by a User Equipment, UE, an available channel of an unauthorized carrier indicated by a network-side device, and smoothing the measurement result and reporting the smoothed measurement result to the network-side device.

11. The measuring method according to claim 10, measuring, by the UE, the available channel of the unauthorized carrier indicated by the network-side device comprises: measuring, by the UE, the available channel of the unauthorized carrier according to a measurement reference signal issued by the network-side device.

12. The measuring method according to claim 10 or 11, wherein smoothing the measurement result and reporting the smoothed measurement result to the network-side device comprises:

performing, by the UE, statistics on the measurement result according to a time period for occupying the available channel of the unauthorized carrier for each occupying or a specified time period; and reporting the measurement result of the time period of occupying the available channel via an authorized carrier or the unauthorized carrier during the time period of occupying the available channel.

13. The measuring method according to claim 12, wherein smoothing the measurement result and reporting the smoothed measurement result to the network-side device comprises: after measuring during both the time period of occupying the available channel and the time period of not occupying the available channel, smoothing, by the UE, the measurement results of the time period of occupying the available channel and the time period of not occupying the available channel in any one of:

1) separately smoothing the measurement result of the time period of occupying the available channel, and separately smoothing the measurement result of the time period of not occupying the available channel; and
2) smoothing the measurement results of the time period of occupying the available channel and the time period of not occupying the available channel together through different weighting factors.

14. A measuring method for an unauthorized carrier, comprising:

determining, by a network-side device, an available channel of an unauthorized carrier according to an available state and the availability of an unauthorized carrier channel, and instructing a User Equipment, UE, to measure the available channel; and
measuring, by the UE, the available channel of the unauthorized carrier indicated by the network-side device, and smoothing the measurement result and reporting the smoothed measurement result to the network-side device.

15. A network-side device, comprising: an available channel determining module and a signal issuing module; wherein the available channel determining module is configured to determine an available channel of an unauthorized carrier according to an available state and the availability of an unauthorized carrier channel; and the signal issuing module is configured to instruct a User Equipment, UE, to measure the available channel.

16. The network-side device according to claim 15, wherein the signal issuing module is configured to send a measurement reference signal to the UE during the time period of occupying the available channel, so as to instruct the UE to measure the available channel according to the measurement reference signal.

17. The network-side device according to claim 15 or 16, wherein the available channel determining module is configured to determine the available state of the unauthorized carrier channel as a target according to a regional regulatory requirement, and after determining the available state of the unauthorized carrier channel is a normal used state, measure the availability of the unauthorized carrier channel according to a fixed measuring bandwidth or a variable measuring bandwidth, so as to obtain the available channel according to the measurement.

18. The network-side device according to claim 17, wherein the available channel determining module measures the availability by any one of:

> 1) detecting an energy on one or more unauthorized carrier channels, and determining the availability of the unauthorized carrier channel according to the relationship between the detected energy and a preset threshold;
> 2) measuring a co-system interference and an inter-system interference of the unauthorized carrier channel, and determining the availability of the unauthorized carrier channel according to the measured interference result; when it is detected that interference signals are inter-system signals, considering the unauthorized carrier channel as an unavailable channel; when it is detected that interference signals are co-system signals, considering the unauthorized carrier channel as an available channel; when it is detected that a part of the interference signals is the co-system signals, and the other part of the interference signals is the inter-system signals, according to the preset threshold of the proportion of a co-system signal energy v.s. inter-system signal energy, when the co-system signal energy is greater than the threshold, determining the interference as the co-system interference, and considering the unauthorized carrier channel as the available channel; when the co-system signal energy is not greater than the threshold, determining the interference as the inter-system interference, and considering the unauthorized carrier channel as the unavailable channel; when the interference signal during silence of a system is detected, determining the interference as the inter-system interference, and considering the unauthorized carrier channel as the unavailable channel; and
> 3) presetting, by the network-side device, a first threshold, a second threshold and a third threshold, and detecting the energy on one or more unauthorized carrier channels; when the detected energy is less than the first threshold, considering the unauthorized carrier channel as the directly available channel; when the detected energy is greater than the first threshold and less than the second threshold, measuring the co-system interference and the inter-system interference of the unauthorized carrier channel, and determining the availability of the unauthorized carrier channel according to the measured interference result; when the detected energy is greater than the third threshold, considering the unauthorized carrier channel as the unavailable channel.

19. The network-side device according to claim 16, wherein the signal issuing module is further configured to, when a regional regulation allows the sending of Short Control Signaling, SCS, send a measurement reference signal in form of SCS to the UE during the time period of not occupying the available channel.

20. The network-side device according to claim 16, wherein the signal issuing module is further configured to implicitly inform the UE of the sending situation of the measurement reference signal in form of SCS through the available state of the available channel, or explicitly inform the UE of the sending situation of the measurement reference signal in form of SCS by sending a downlink control signal to the UE through a Primary Cell, Pcell.

21. The network-side device according to claim 16, wherein the available channel determining module is further configured to still continue detecting the available state and the availability of all the unauthorized carrier channels during the time period of occupying the available channel of the unauthorized carrier, maintain a list of available channels, and when determining, according to the measurement result reported by the UE, that the channel state of the unauthorized carrier channel being occupied deteriorates, switch to the other channels according to the list of available channels.

22. The network-side device according to claim 15, further comprising: an uplink measurement module, which is configured to, when uplink transmission on the unauthorized carrier is supported, measure uplink measurement signals discontinuously sent by the UE.

23. A User Equipment, UE, comprising: a measuring module and a reporting module, wherein
the measuring module is configured to measure an available channel of an unauthorized carrier indicated by a network-side device; and
the reporting module is configured to smooth the measurement result and report the smoothed measurement result to the network-side device.

24. The UE according to claim 23, wherein the measuring module is configured to measure the available channel of the unauthorized carrier according to a measurement reference signal issued by the network-side device.

25. The UE according to claim 23 or 24, wherein the reporting module is configured to perform statistics on the measurement results according to a time period for occupying the available channel of the unauthorized carrier for each occupying or a specified time period; and report the measurement result of the time period of occupying the available channel via an authorized carrier or the unauthorized carrier during the time period of occupying the available channel.

26. The UE according to claim 25, wherein the reporting module is configured to, after the measuring module has measured both the time period of occupying the available channel and the time period of not occupying the available channel, smooth the measurement results of the time period of occupying the available channel and the time period of not occupying the available channel by any one of:

   1) separately smoothing the measurement result of the time period of occupying the available channel, and separately smoothing the measurement result of the time period of not occupying the available channel; and
   2) smoothing the measurement results of the time period of occupying the available channel and the time period of not occupying the available channel together through different weighting factors.

27. A system for measuring an unauthorized carrier, comprising: a network-side device and a User Equipment, UE; wherein
   the network-side device is configured to determine an available channel of an unauthorized carrier according to an available state and the availability of an unauthorized carrier channel, and instruct the UE to measure the available channel; and
   the UE is configured to measure the available channel of the unauthorized carrier indicated by the network-side device, and smooth the measurement result and report the smoothed measurement result to the network-side device.

28. The system for measuring according to claim 27, wherein the network-side device is configured to send a measurement reference signal to the UE during the time period of occupying the available channel, so as to instruct the UE to measure the available channel according to the measurement reference signal;
   correspondingly, the UE is configured to measure the available channel of the unauthorized carrier according to the measurement reference signal issued by the network-side device.

29. The system for measuring according to claim 27, wherein the network-side device is configured to determine the available state of the unauthorized carrier channel as a target according to a regional regulatory requirement, and after determining the available state of the unauthorized carrier channel is a normal used state, measure the availability of the unauthorized carrier channel according to a fixed measuring bandwidth or a variable measuring bandwidth, so as to obtain the available channel according to the measurement.

30. The network-side device according to claim 29, wherein the network-side device measures the availability by any one of:

   1) detecting an energy on one or more unauthorized carrier channels, and determining the availability of the unauthorized carrier channel according to the relationship between the detected energy and a preset threshold;
   2) measuring a co-system interference and an inter-system interference of the unauthorized carrier channel, and determining the availability of the unauthorized carrier channel according to the measured interference result; when it is detected that interference signals are inter-system signals, considering the unauthorized carrier channel as an unavailable channel; when it is detected that interference signals are co-system signals, considering the unauthorized carrier channel as an available channel; when it is detected that a part of the interference signals is the co-system signals, and the other part of the interference signals is the inter-system signals, according to the preset threshold of the proportion of a co-system signal energy v.s. inter-system signal energy, when the co-system signal energy is greater than the threshold, determining the interference as the co-system interference, and considering the unauthorized carrier channel as the available channel; when the co-system signal energy is not greater than the threshold, determining the interference as the inter-system interference, and considering the unauthorized carrier channel as the unavailable channel; when the interference signal during silence of a system is detected, determining the interference as the inter-system interference, and considering the unauthorized carrier channel as the unavailable channel; and
   3) presetting a first threshold, a second threshold and a third threshold, and detecting the energy on one or more unauthorized carrier channels; when the detected energy is less than the first threshold, considering the unauthorized carrier channel as the directly available channel; when the detected energy is greater than the first threshold and less than the second threshold, measuring the co-system interference and the inter-system interference of the unauthorized carrier channel, and determining the availability of the unauthorized carrier channel according to the measured interference result; when the detected energy is greater than the third threshold, considering the unauthorized carrier channel as the unavailable channel.

31. A computer storage medium containing a set of instructions that, when being executed, cause at least one processor to perform the measuring method for an unauthorized carrier according to any one of claims 1 to 9, or perform the measuring method for an unauthorized carrier according to any one of claims 10 to 13.

Fig. 1

Determining an available channel of an unauthorized carrier
by a network-side device according to an available state
and the availability of an unauthorized carrier channel
— 101

Instructing, by the network-side device, a UE to measure
the available channel
— 102

Fig. 2

a

1 2 3 4 5 6 7 8 9 10 11 12 13 14 15 16 17 18 19 20

b

1 2 3 4 5 6 7 8 9 10 11 12 13 14 15 16 17 18 19

c

1 2 3 4 5 6 7 8 9 10 11 12 13 14 15 16 17

d

Fig. 3

301

| Measuring, by the UE, the available channel of the unauthorized carrier indicated by the network-side device |
| --- |

302

| Smoothing the measurement result and reporting the smoothed measurement result to the network-side device by the UE |
| --- |

Fig. 4

401

| Determining the available channel of the unauthorized carrier according to the available state and the availability of the unauthorized carrier channel by the network-side device |
| --- |

402

| Instructing, by the network-side device, the UE to measure the available channel |
| --- |

403

| Measuring, by the UE, the available channel of the unauthorized carrier indicated by the network-side device |
| --- |

404

| Smoothing the measurement result and reporting the smoothed measurement result to the network-side device by the UE |
| --- |

Fig. 5

```
                        ⌐51                        ⌐52
            ┌──────────────────┐      ┌──────────────────┐
            │ Available channel│      │                  │
            │   determining    │─────▶│  Signal issuing  │
            │     module       │      │     module       │
            └──────────────────┘      └──────────────────┘
                                              ╲
                                               ╲      ⌐53
                              ┌ ─ ─ ─ ─╲─ ─ ─ ─ ┐
                              │     Uplink       │
                              │  measurement     │
                              │     module       │
                              └ ─ ─ ─ ─ ─ ─ ─ ─ ─┘
```

Fig. 6

```
                ⌐61                        ⌐62
    ┌──────────────────┐      ┌──────────────────┐
    │    Measuring     │─────▶│    Reporting     │
    │     module       │      │     module       │
    └──────────────────┘      └──────────────────┘
```

Fig. 7

```
                ⌐71                        ⌐72
    ┌──────────────────┐      ┌──────────────────┐
    │   Network-side   │─────▶│                  │
    │     device       │      │        UE        │
    └──────────────────┘      └──────────────────┘
```

# INTERNATIONAL SEARCH REPORT

| International application No. |
| --- |
| **PCT/CN2015/076576** |

**A. CLASSIFICATION OF SUBJECT MATTER**

H04W 24/08 (2009.01) i

According to International Patent Classification (IPC) or to both national classification and IPC

**B. FIELDS SEARCHED**

Minimum documentation searched (classification system followed by classification symbols)

H04W; H04L

Documentation searched other than minimum documentation to the extent that such documents are included in the fields searched

Electronic data base consulted during the international search (name of data base and, where practicable, search terms used)

CNPAT, CNKI, WPI, EPODOC: unauthorized, unlicensed, available, channel, measure

**C. DOCUMENTS CONSIDERED TO BE RELEVANT**

| Category* | Citation of document, with indication, where appropriate, of the relevant passages | Relevant to claim No. |
| --- | --- | --- |
| X | CN 102301773 A (QUALCOMM INC.), 28 December 2011 (28.12.2011), description, paragraphs [0034]-[0044], [0049] and [0076]-[0079] | 1-31 |
| X | CN 102365889 A (QUALCOMM INC.), 29 February 2012 (29.02.2012), description, paragraphs [0170]-[0194] | 1-31 |
| A | WO 2013063808 A1 (RENESAS MOBILE CORPORATION), 10 May 2013 (10.05.2013), the whole document | 1-31 |

☐ Further documents are listed in the continuation of Box C.      ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 27 July 2015 (27.07.2015) | **17 August 2015 (17.08.2015)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **LI, Wen** Telephone No.: (86-10) **62413858** |
| --- | --- |

Form PCT/ISA/210 (second sheet) (July 2009)

## INTERNATIONAL SEARCH REPORT
### Information on patent family members

| International application No. |
|---|
| **PCT/CN2015/076576** |

| Patent Documents referred in the Report | Publication Date | Patent Family | Publication Date |
|---|---|---|---|
| CN 102301773 A | 28 December 2011 | KR 20110122703 A | 10 November 2011 |
| | | US 2010197317 A1 | 05 August 2010 |
| | | TW 201116121 A | 01 May 2011 |
| | | JP 2012517147 A | 26 July 2012 |
| | | EP 2392167 A2 | 07 December 2011 |
| | | WO 2010088586 A2 | 05 August 2010 |
| | | IN CHENP201105384 E | 05 October 2012 |
| CN 102365889 A | 29 February 2012 | JP 2014039271 A | 27 February 2014 |
| | | KR 20130088898 A | 08 August 2013 |
| | | KR 20110135873 A | 19 December 2011 |
| | | JP 2012521729 A | 13 September 2012 |
| | | WO 2010111150 A2 | 30 September 2010 |
| | | JP 2014132761 A | 17 July 2014 |
| | | TW 201129192 A | 16 August 2011 |
| | | US 2010246506 A1 | 30 September 2010 |
| | | KR 20130088897 A | 08 August 2013 |
| | | KR 20130088899 A | 08 August 2013 |
| | | KR 20130094854 A | 26 August 2013 |
| | | EP 2412191 A2 | 01 February 2012 |
| | | JP 2015029330 A | 12 February 2015 |
| | | IN CHENP201106525 E | 07 December 2012 |
| WO 2013063808 A1 | 10 May 2013 | US 2014348094 A1 | 27 November 2014 |

Form PCT/ISA/210 (patent family annex) (July 2009)